# FASCICULE DE BREVET EUROPEEN

(11) **EP 2 650 657 B1**
(45) Date de publication et mention de la délivrance du brevet: **27.05.2020**
(21) Numéro de dépôt: 13163229.1
(22) Date de dépôt: 10.04.2013
(51) Int. Cl.: G01F 9/00, G01F 25/00

(54) **Système de mesure de consommation de carburant d'un moteur et procédé de commande d'un tel système**
Messsystem des Kraftstoffverbrauchs eines Motors und Steuerverfahren eines solchen Systems
System for measuring fuel consumption of an engine and method for controlling such a system

(30) Priorité: 11.04.2012 FR 1253322
(43) Date de publication de la demande: 16.10.2013
(73) Titulaire: SEASIDETECH, 29300 Mellac (FR)
(72) Inventeur: FLOURIOT, Vincent, 56560 Guiscriff (FR); DORMEGNIES, Pierre-Alexis, 85570 L'Hermenault (FR)
(74) Mandataire: Novagraaf Technologies

(56) Documents cités:
- EP-A1- 0 104 978
- JP-A- 61 247 924

## Description

### Domaine technique

L'invention concerne la mesure de consommation de carburant de moteur, et notamment de moteurs de navires.

### Etat de la technique

Cette mesure est classiquement réalisée par des débitmètres montés sur l'arrivée et la sortie de carburant du moteur, comme décrit par exemple dans le document EP 0 104 978. Dans le cas d'un moteur du type comprenant un circuit d'alimentation en carburant placé entre un réservoir et le moteur et un circuit de retour de carburant du moteur vers le réservoir, un premier débitmètre est par exemple monté sur le circuit d'alimentation en carburant du moteur pour générer un signal de mesure du flux de carburant entrant dans le moteur et un deuxième débitmètre est monté sur le circuit de retour de carburant du moteur pour générer un signal de mesure du flux de carburant sortant du moteur. Les deux signaux de mesure sont ensuite fournis à un circuit de traitement qui, à partir desdits signaux de mesure, détermine la consommation de carburant du moteur en effectuant la différence entre les deux signaux.

Les débitmètres étant habituellement des capteurs mécaniques, par exemple des capteurs à roues elliptiques, un risque non négligeable de blocage de ces derniers existe, lequel blocage entraine l'arrêt de l'approvisionnement en carburant du moteur puis son extinction.

Pour faire face à ce risque, il est connu d'installer une vanne de dérivation (ou bypass) manuelle au niveau du premier débitmètre (débitmètre d'arrivée) pour pouvoir continuer à alimenter en carburant le moteur lorsque ledit premier débitmètre est bloqué et/ou une vanne de dérivation manuelle au niveau du deuxième débitmètre (débitmètre de retour) pour pouvoir continuer à évacuer le carburant excédentaire non consommé par le moteur lorsque ledit deuxième débitmètre est bloqué. Cette vanne de dérivation est généralement manuelle, ce qui fait que, lorsqu'un problème est détecté ou suspecté au niveau d'un débitmètre, un opérateur doit se déplacer dans la salle des machines où se trouvent notamment le moteur, les débitmètres et les vannes de dérivation puis ouvrir la vanne de dérivation adéquate pour contourner le débitmètre défaillant ou suspecté de défaillance. Cela peut prendre un certain temps, surtout lorsque la salle des machines est difficilement accessible, par exemple lorsqu'elle est accessible par une trappe ménagée à travers le plancher du navire. Par ailleurs, ce problème n'étant généralement détecté qu'avec l'arrêt du moteur, l'opérateur n'intervient sur la vanne de dérivation qu'après avoir constaté l'arrêt du moteur. Il en résulte qu'il peut se passer quelques minutes après la constatation de l'arrêt du moteur avant que l'opérateur n'ouvre la vanne de dérivation. Cette situation n'est pas acceptable car elle peut être dangereuse pour le navire, notamment lorsque le navire entre dans des zones où le trafic est important, par exemple dans une passe étroite, un port ou un estuaire. Par ailleurs, l'ouverture manuelle des vannes de dérivation est parfois effectuée préventivement par l'équipage avant que le navire entre dans une zone délicate. Cette intervention manuelle détourne l'équipage de ses missions principales.

Le document JP 61 247924 décrit un dispositif de sécurité pour un débitmètre de carburant dans un véhicule.

### Description de l'invention

Aussi, un but de l'invention est de proposer un procédé permettant d'éviter l'arrêt du moteur en raison de la défaillance d'un débitmètre.

Un autre but de l'invention est de proposer un procédé de commande automatique permettant d'éviter à un opérateur de se déplacer pour ouvrir les vannes de dérivation en cas de défaillance de l'un des débitmètres ou de manière préventive.

Un autre but de l'invention est d'ouvrir le moins possible la vanne de dérivation pour fausser le moins possible la mesure de consommation de carburant du moteur.

Un exemple d'un système de mesure de la consommation de carburant d'un moteur, le moteur étant équipé d'un circuit d'alimentation en carburant placé entre un réservoir et le moteur et d'un circuit de retour de carburant du moteur vers le réservoir, est un système comprenant:
- un débitmètre d'arrivée, monté sur le circuit d'alimentation en carburant, pour générer un signal de mesure du flux de carburant entrant dans le moteur, appelé premier signal de mesure, et un débitmètre de retour, monté sur le circuit de retour de carburant, pour générer un signal de mesure du flux de carburant sortant du moteur; appelé deuxième signal de mesure,
- une unité de traitement pour déterminer, à partir desdits premier et deuxième signaux de mesure, la consommation de carburant du moteur, comportant en outre :
   - une première électrovanne, montée en parallèle avec l'un desdits débitmètres d'arrivée et de retour, appelé premier débitmètre, pour contourner ledit premier débitmètre en cas de blocage de ce dernier ; et
   - une unité de commande pour détecter, à partir desdits premier et deuxième signaux de mesure, un blocage dudit premier débitmètre et commander l'ouverture de ladite première électrovanne en cas de blocage du premier débitmètre de manière à éviter un arrêt de l'approvisionnement en carburant du moteur ou un arrêt du retour carburant vers le réservoir.

On détecte un blocage d'un débitmètre lorsque celui-ci ne tourne pas en raison d'une défaillance mécanique ou de la présence d'impuretés dans le carburant. Toutefois, un débitmètre peut ne pas tourner dans des situations autres qu'une situation de blocage :
- le débitmètre d'arrivée et le débitmètre de retour ne tournent pas lorsque le moteur est à l'arrêt ;
- pendant la phase de démarrage du moteur, le débitmètre de retour ne tourne pas immédiatement quand le moteur a été alimenté en carburant ; il y a un temps de latence ;
- de même, pendant la phase d'arrêt du moteur, le débitmètre d'arrivée arrête de tourner immédiatement après la coupure de l'alimentation en carburant du moteur alors que le débitmètre de retour continue à tourner encore pendant quelques secondes, le temps que le moteur s'arrête complètement;

L'unité de commande ouvre automatiquement la première électrovanne lorsqu'elle détecte un blocage du premier débitmètre et ce blocage est détecté à partir des deux signaux de mesure fournis par le débitmètre d'arrivée et le débitmètre de retour de manière à faire une discrimination entre les situations où le débitmètre est bloqué et les situations où le moteur est en phase de démarrage ou d'arrêt ou est complètement arrêté.

Le système peut comprendre en outre une deuxième électrovanne, montée en parallèle avec l'autre desdits débitmètres d'arrivée et de retour, appelé deuxième débitmètre, pour contourner le deuxième débitmètre en cas de blocage de ce dernier ; l'unité de commande étant apte à déterminer, à partir desdits premier et deuxième signaux de mesure, un blocage dudit deuxième débitmètre et à commander l'ouverture de ladite deuxième électrovanne en cas de blocage deuxième débitmètre.

Ladite première électrovanne et/ou ladite deuxième électrovanne peut ou peuvent être commandée(s) à distance depuis un écran de contrôle, par exemple, situé dans le poste de commande du navire, pour réduire les déplacements de l'équipage.

Ladite première électrovanne et/ou ladite deuxième électrovanne peut ou peuvent être des électrovannes normalement ouvertes pour prévenir tout risque de dysfonctionnement en cas de perte de l'alimentation électrique sur le navire.

L'invention concerne un procédé de commande d'un système tel que défini précédemment, caractérisé en ce qu'il comporte les étapes successives suivantes :
a) déterminer si le débit mesuré par le premier débitmètre est inférieur à une première valeur seuil prédéterminée et si le débit mesuré par l'autre desdits débitmètres d'arrivée et de retour, appelé deuxième débitmètre, est supérieur ou égal à une deuxième valeur seuil prédéterminée ;
b) ouvrir pendant une première durée prédéterminée la première électrovanne, si le débit mesuré par le premier débitmètre est inférieur à la première valeur seuil de débit prédéterminée et le débit mesuré par le deuxième débitmètre est supérieur ou égal à la deuxième valeur seuil de débit prédéterminée
c) fermer ladite première électrovanne pendant une deuxième durée prédéterminée;
d) déterminer si le débit mesuré par le premier débitmètre est toujours inférieur à la première valeur seuil de débit prédéterminée et si le débit mesuré par le deuxième débitmètre est toujours supérieur ou égal à la deuxième valeur seuil de débit prédéterminée; et
e) si le débit mesuré par le premier débitmètre est toujours inférieur à la première valeur seuil de débit prédéterminée et le débit mesuré par le deuxième débitmètre est toujours supérieur ou égal à la deuxième valeur seuil de débit prédéterminée, ouvrir ladite électrovanne jusqu'à ce que ledit premier débitmètre soit réparé ou remplacé.

Cette action d'ouverture temporaire de ladite première électrovanne (à l'étape b) dans un temps de réaction très court est très importante car elle a pour but de rétablir la continuité d'alimentation en carburant du moteur avant que ce dernier ne s'éteigne.

Selon un mode de réalisation particulier dans lequel chacun des débitmètres d'arrivée et de retour est équipé d'une électrovanne, on ouvre temporairement à l'étape b) les deux électrovannes et, aux étapes c) et e), on ferme les deux électrovannes.

Selon l'invention, la deuxième durée prédéterminée pendant laquelle ladite première électrovanne est fermée est très courte et est comprise entre 0,5 s et 20 s, de préférence entre 2s et 5s, de manière à interrompre le moins possible l'alimentation en carburant du moteur ou le retour du carburant vers le réservoir dans le cas où le débitmètre serait réellement bloqué.

Selon un mode de réalisation particulier, ladite première valeur seuil de débit prédéterminées est inférieure à 50% d'une première valeur prédéterminée de débit, dite première valeur normale de débit, associée à un fonctionnement dit normal dudit premier débitmètre pour le régime moteur considéré et ladite deuxième valeur seuil de débit prédéterminées est inférieure à 50% d'une seconde valeur prédéterminée de débit, dite deuxième valeur normale de débit, associée à un fonctionnement dit normal dudit deuxième débitmètre. Lesdites première et deuxième valeurs seuil de débit sont donc des valeurs faibles (inférieures à 50%) au regard du débit de circulant normalement dans le circuit d'alimentation et le circuit de retour lorsque les débitmètres d'arrivée et de retour fonctionnent normalement.

Selon l'invention, la première durée prédéterminée pendant la ou les électrovannes est/sont ouverte(s) est inférieure à 300 secondes et est avantageusement comprise entre 30 et 120 secondes, de préférence entre 5 et 15 secondes.

Selon un mode de réalisation particulier, le procédé comprend en outre les étapes suivantes :
- avant l'étape a), on initialise un paramètre n,
- avant l'étape b), on incrémente ledit paramètre n ;
- avant l'étape e), on compare la valeur du paramètre n à une valeur maximale prédéterminée N,
- si la valeur du paramètre n est égale à ladite valeur maximale prédéterminée N, on réalise l'étape e) et sinon, on recommence à l'étape d'incrémentation de n.

Dans ce mode de réalisation, on vérifie plusieurs fois que le débitmètre est bloqué. Si, après N tests du débitmètre, on constate que le résultat de la boucle de test est toujours le même, on peut alors considérer que le débitmètre est effectivement bloqué. On ouvre alors l'électrovanne associée pour contourner ce débitmètre. N est par exemple égal à 3. Ces actions répétées de fermetures/ouvertures de l'électrovanne ont pour but d'obtenir une confirmation qu'il s'agit bien d'un blocage réel de débitmètre.

D'autres avantages pourront encore apparaître à l'homme du métier à la lecture des exemples ci-dessous, illustrés par les figures annexées, donnés à titre illustratif.

### Brève description des figures

- La figure 1 représente un schéma fonctionnel d'un système de mesure de la consommation de carburant d'un moteur ; et
- La figure 2 est un organigramme récapitulant les étapes d'un procédé de commande conforme à l'invention.

### Description détaillée d'au moins un mode de réalisation

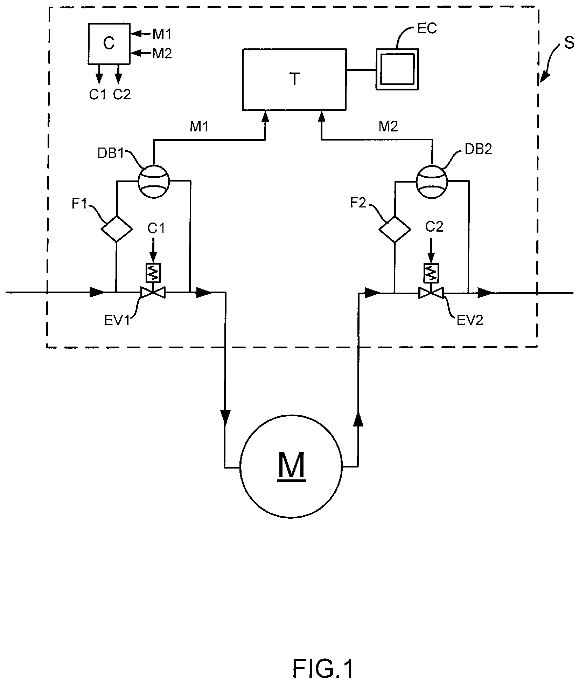

En référence à la figure 1, le système référencé S, est destiné à mesurer la consommation de carburant d'un moteur M. Ce moteur est équipé d'un circuit d'alimentation en carburant (non représenté) placé entre un réservoir et le moteur et d'un circuit de retour de carburant (non représenté) du moteur vers ledit réservoir ou un autre réservoir.

Le système S comprend un débitmètre d'arrivée DB1 monté sur le circuit d'alimentation en carburant, en amont du moteur M, pour générer un signal de mesure M1 du flux de carburant entrant dans le moteur et un débitmètre de retour DB2 monté sur le circuit de retour de carburant, pour générer un signal de mesure M2 du flux de carburant sortant du moteur ; appelé deuxième signal de mesure. Les signaux de mesure M1 et M2 sont transmis à une unité de traitement T chargée de déterminer, à partir de ces deux signaux de mesure, la consommation de carburant du moteur M. En pratique, l'unité de traitement T calcule la différence entre le signal de mesure M1 et le signal de mesure M2. Le résultat est affiché sur un écran de contrôle EC du navire.

Des filtres F1 et F2 sont avantageusement prévus en amont respectivement des débitmètres DB1 et DB2 pour filtrer d'éventuelles impuretés présentes dans le carburant.

Selon une caractéristique, le système S comporte au moins une électrovanne montée en parallèle avec l'un desdits débitmètres DB1, DB2 pour le contourner si celui-ci est bloqué et une unité de commande C pour détecter, à partir des signaux de mesure M1 et M2, si le débitmètre muni de l'électrovanne est bloqué et, si tel est le cas, commander l'ouverture de l'électrovanne.

Comme illustré par la figure 1, le système comprend une électrovanne EV1 montée en parallèle avec le débitmètre DB1 et une électrovanne EV2 montée en parallèle avec le débitmètre DB2. Les électrovannes EV1 et EV2 sont commandés respectivement par des signaux de commande C1 et C2 fournis par l'unité de commande C. Si l'unité de commande C détecte un blocage du débitmètre DB1, elle commande, via le signal de commande C1, l'ouverture de l'électrovanne EV1 pour court-circuiter le débitmètre DB1 et le filtre F1. De même, si l'unité de commande C détecte un blocage du débitmètre DB2, elle commande, via le signal de commande C2, l'ouverture de l'électrovanne EV2 pour court-circuiter le débitmètre DB2 et le filtre F2. En variante, lorsque l'unité de commande C détecte le blocage de l'un des deux débitmètres, elle commande l'ouverture des deux électrovannes EV1 et EV2.

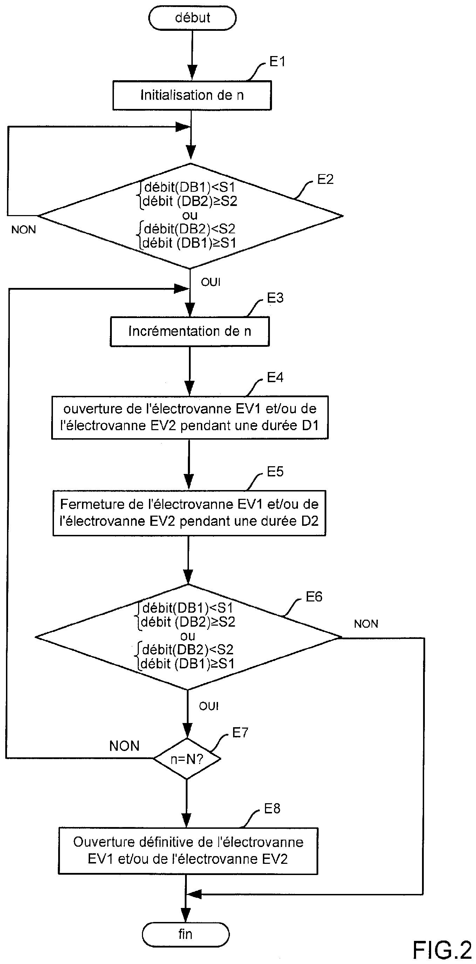

Le procédé de commande du système de la figure 1 est décrit plus en détail ci-après en référence à la figure 2.

Selon une première étape E1, on initialise un paramètre de boucle n de sorte que n soit égal à 0. Ce paramètre de boucle vise à fixer le nombre de tests à effectuer sur le débitmètre pour détecter s'il est réellement bloqué.

Selon une étape E2, on détecte si l'un des débitmètres DB1 et DB2 est potentiellement bloqué. Si le débit du débitmètre DB1 est inférieur à un seuil minimal S1 et si le débit du débitmètre DB2 est supérieur ou égal à un seuil minimal S2, le débitmètre DB1 est potentiellement bloqué. De même, si le débit du débitmètre DB2 est inférieur au seuil minimal S2 et si le débit du débitmètre DB1 est supérieur ou égal au seuil minimal S1, le débitmètre DB2 est potentiellement bloqué. Les seuils S1 et S2 sont valeurs proches de zéro. Selon un mode de réalisation particulier, le seuil S1 est inférieur à 50% de la valeur de débit circulant habituellement dans le circuit d'alimentation du moteur, pour le régime moteur considéré lorsque le débitmètre DB1 fonctionne normalement. De même, le seuil S2 est inférieur à 50% de la valeur de débit circulant habituellement dans le circuit de retour du moteur, pour le régime moteur considéré, lorsque le débitmètre DB2 fonctionne normalement. Selon un mode de réalisation particulier, les seuils S1 et S2 sont égaux à environ 20% de la valeur de débit circulant habituellement dans le circuit d'alimentation et le circuit de retour du moteur.

Si l'une de ces situations (blocage potentiel du débitmètre DB1 ou blocage potentiel du débitmètre DB2) est détecté, on incrémente le paramètre de boucle N à une étape E3 et on ouvre, pendant une durée prédéterminée D1, l'électrovanne montée en parallèle du débitmètre potentiellement bloqué à une étape E4. La durée D1 est inférieure à 300 secondes et est avantageusement comprise entre 30 et 120 secondes.

En variante, dès qu'on détecte le blocage de l'un des débitmètres, on déclenche l'ouverture des deux électrovannes.

Une fois la durée D1 écoulée, on ferme à une étape E5 l'électrovanne ou les électrovannes ouvertes à l'étape précédente.

On vérifie ensuite pendant une durée D2 si le débitmètre qui a été détecté comme potentiellement bloqué à l'étape E2 l'est toujours. La durée D2 est avantageusement proche de zéro de manière a limiter au plus la restriction d'alimentation en gasoil sur le moteur. D2 est par exemple compris entre 0,5 s et 20 s, de préférence entre 2s et 5s. Cette étape de vérification, E6, est identique à l'étape E2.

Si le débitmètre n'est plus détecté comme potentiellement bloqué par l'unité de commande C, le procédé est terminé et le paramètre n est réinitialisé a zéro si, après un temps prédéterminé, aucun blocage n'a été détecté ou suspecté. Sinon, on compare le paramètre de boucle n à une valeur maximale N, qui est par exemple égale 3. Tant que la valeur du paramètre n est inférieure à 3, on recommence les étapes E3 à E6. Cela signifie que l'on vérifie 3 fois le blocage potentiel du débitmètre pour s'assurer qu'il est réellement bloqué et que ce blocage n'est pas discontinu. Dans le mode de réalisation le plus simple, N est égal 1.

Ensuite, au bout des N tests, si le débitmètre est toujours bloqué, on ré-ouvre, à une étape E8, l'électrovanne ou les électrovannes fermée(s) à l'étape E5 jusqu'à ce qu'un opérateur répare ou change le débitmètre défaillant.

Lorsque le moteur consomme la totalité du gasoil injecté et que le débit mesuré par le débitmètre de retour DB2 est durablement égal a zéro, l'unité de commande C détecte un blocage du débitmètre DB2 si la valeur seuil S2 est supérieure à zéro. L'unité de commande C déclenche alors l'ouverture de l'électrovanne V2. Cela ne perturbe pas la mesure de consommation de carburant puisque, dans ce cas précis, le débit traversant le circuit de retour de carburant est nul.

Selon un mode de réalisation avantageux, le capitaine du navire est averti de l'ouverture automatique de l'électrovanne ou des électrovannes par un message ou un pictogramme affiché sur l'écran EC.

Selon un mode de réalisation avantageux, le capitaine du navire est également averti de l'ouverture définitive de la ou des électrovannes (étape E8) par un message ou un pictogramme affiché sur l'écran EC.

Avantageusement, le système comprend également un bouton poussoir pour l'ouverture manuelle de chacune des électrovannes EV1 et EV2 ou l'ouverture manuelle et simultanée des deux électrovannes.

Selon un mode de réalisation en variante, l'électrovanne EV1 (respectivement EV2) est commandée indépendamment de l'état du débitmètre DB2 (resp.DB1). Il a été constaté que le débit de carburant dans le circuit de retour pouvait être parfois durablement nul. Dans cette situation, qui est rare, le carburant fourni au moteur est totalement consommé par ce dernier. Si le seuil S2 n'est pas nul, l'unité de commande détecte alors un blocage potentiel du débitmètre DB2. Si on commande l'ouverture des deux électrovannes EV1 et EV2 dès qu'un débitmètre est détecté comme potentiellement bloqué et si N est un nombre fini, les deux électrovannes EV1 et EV2 sont définitivement ouvertes au bout des N tests de boucle et il n'y a alors plus de mesure de consommation de carburant possible pendant cette phase. Dans ce cas, il est alors préférable que N soit infini (les étapes E1, E3, E7 et E8 sont supprimées) et que l'étape E2 ou E6 se limite à vérifier que débit(DB1)≥ S1 ou débit(DB2)≥S2. Les étapes E4 et E5 sont également supprimées et sont replacer par une étape consistant à fermer l'électrovanne E1 si débit(DB1)≥ S1 ou l'électrovanne E2 si débit(DB2)≥ S2.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de commande d'un système (S) de mesure de la consommation de carburant d'un moteur, le moteur (M) étant équipé d'un circuit d'alimentation en carburant placé entre un réservoir et le moteur et d'un circuit de retour de carburant du moteur vers le réservoir,
le système comprenant un débitmètre d'arrivée (DB1) monté sur le circuit d'alimentation en carburant, un débitmètre de retour (DB2) monté sur le circuit de retour de carburant, une première électrovanne (EV1) montée en parallèle avec l'un desdits débitmètres d'arrivée et de retour, appelé premier débitmètre, ledit procédé étant **caractérisé en ce qu'**il comporte les étapes successives suivantes :
a) déterminer (E2) si le débit mesuré par le premier débitmètre est inférieur à une première valeur seuil de débit prédéterminée (S1 ou S2) et si le débit mesuré par l'autre desdits débitmètres d'arrivée et de retour, appelé deuxième débitmètre, est supérieur ou égal à une deuxième valeur seuil de débit prédéterminée (S1 ou S2) ;
b) ouvrir (E4) pendant une première durée prédéterminée (D1) la première électrovanne si le débit mesuré par le premier débitmètre est inférieur à la première valeur seuil de débit prédéterminée et le débit mesuré par le deuxième débitmètre est supérieur ou égal à la deuxième valeur seuil de débit prédéterminée, ladite première durée prédéterminée (D1) étant inférieure à 300 s, de préférence entre 30 et 120 secondes
c) fermer (E5) pendant une deuxième durée prédéterminée (D2) ladite première électrovanne, ladite deuxième durée (D2) étant comprise entre 0,5 s et 20 s, de préférence entre 2s et 5s ;
d) déterminer (E6) si le débit mesuré par le premier débitmètre est toujours inférieur à la première valeur seuil de débit prédéterminée et si le débit mesuré par le deuxième débitmètre est toujours supérieur ou égal à la deuxième valeur seuil de débit prédéterminée; et
e) si le débit mesuré par le premier débitmètre est toujours inférieur à la première valeur seuil de débit prédéterminée et le débit mesuré par le deuxième débitmètre est toujours supérieur ou égal à la deuxième valeur seuil de débit prédéterminée, ouvrir (E8) ladite électrovanne.

2. Procédé selon la revendication 1, dans lequel le système comprend en outre une deuxième électrovanne (EV2), montée en parallèle avec l'autre desdits débitmètres d'arrivée et de retour, appelé deuxième débitmètre, **caractérisé en ce que**, à l'étape b), on ouvre temporairement lesdites première et deuxième électrovannes et, aux étapes c) et e), on ferme lesdites première et deuxième électrovannes.

3. Procédé selon l'une quelconque des revendications 1 à 2, **caractérisé en ce que** ladite première valeur seuil de débit prédéterminée (S1 ou S2) est inférieure à 50% d'une première valeur prédéterminée de débit, dite première valeur normale de débit, associée à un fonctionnement dit normal de ladite première électrovanne et **en ce que** ladite deuxième valeur seuil de débit prédéterminée (S1 ou S2) est inférieure à 50% d'une seconde valeur prédéterminée de débit, dite deuxième valeur normale de débit, associée à un fonctionnement dit normal de ladite deuxième électrovanne.

4. Procédé selon l'une quelconque des revendications 1 à 3, **caractérisé en ce qu'**il comprend en outre les étapes suivantes :
- avant l'étape a), on initialise (E1) un paramètre n,
- avant l'étape b), on incrémente (E3) ledit paramètre n ;
- avant l'étape e), on compare (E7) la valeur du paramètre n à une valeur maximale prédéterminée N,
- si la valeur du paramètre n est égale à ladite valeur maximale prédéterminée N, on réalise l'étape e) et sinon, on recommence à l'étape d'incrémentation de n.

## Patentansprüche

1. Verfahren zum Steuern eines Systems (S) zum Messen des Kraftstoffverbrauchs eines Motors, wobei der Motor (M) mit einem Kraftstoffversorgungskreis, der zwischen einem Tank und dem Motor angeordnet ist, und einen Kraftstoffrücklaufkreis vom Motor zum Tank ausgestattet ist,
wobei das System einen Zulaufdurchflussmesser (DB1), der an den Kraftstoffversorgungskreis angeschlossen ist, einen Rücklaufdurchflussmesser (DB2), der an den Kraftstoffrücklaufkreis angeschlossen ist, ein erstes Magnetventil (EV1) umfasst, das zu einem aus dem Zulauf- und dem Rücklaufdurchflussmesser, der als erster Durchflussmesser bezeichnet wird, parallel angeschlossen ist, wobei das Verfahren **dadurch gekennzeichnet ist, dass** es die folgenden aufeinanderfolgenden Schritte umfasst:
a) Bestimmen (E2), ob der vom ersten Durchflussmesser gemessene Durchfluss kleiner als ein erster vorbestimmter Durchflussschwellenwert (S1 oder S2) ist, und ob der vom anderen aus dem Zulauf- und dem Rücklaufdurchflussmesser, der als zweiter Durchflussmesser bezeichnet wird, gemessene Durchfluss größer als oder gleich einem zweiten vorbestimmten Durchflussschwellenwert (S1 oder S2) ist;
b) Öffnen (E4) des ersten Magnetventils während einer ersten vorbestimmten Dauer (D1), wenn der vom ersten Durchflussmesser gemessene Durchfluss kleiner als der erste vorbestimmte Durchflussschwellenwert ist und der vom zweiten Durchflussmesser gemessene Durchfluss größer als oder gleich dem zweiten vorbestimmten Durflussschwellenwert ist, wobei die erste vorbestimmte Dauer (D1) weniger als 300 s, vorzugsweise zwischen 30 und 120 Sekunden beträgt;
c) Schließen (E5) des ersten Magnetventils während einer zweiten vorbestimmten Dauer (D2), wobei die zweite Dauer (D2) zwischen 0,5 s und 20 S, vorzugsweise zwischen 2 s und 5 s beträgt;
d) Bestimmen (E6), ob der vom ersten Durchflussmesser gemessene Durchfluss immer noch kleiner als der erste vorbestimmte Durchflussschwellenwert ist, und ob der vom zweiten Durchflussmesser gemessene Durchfluss immer noch größer als oder gleich dem zweiten vorbestimmten Durchflussschwellenwert ist; und
e) Öffnen (E8) des Magnetventils, wenn der vom ersten Durchflussmesser gemessene Durchfluss immer noch kleiner als der erste vorbestimmte Durchflussschwellenwert ist und der vom zweiten Durchflussmesser gemessene Durchfluss immer noch größer als oder gleich dem zweiten vorbestimmten Durchflussschwellenwert ist.

2. Verfahren nach Anspruch 1, wobei das System weiter ein zweites Magnetventil (EV2) umfasst, das zu dem anderen aus dem Zulauf- und dem Rücklaufdurchflussmesser, der als zweiter Durchflussmesser bezeichnet wird, parallel angeschlossen ist, **dadurch gekennzeichnet, dass** beim Schritt b) das erste und zweite Magnetventil vorübergehend geöffnet werden, und bei den Schritten c) und e) das erste und zweite Magnetventil geschlossen werden.

3. Verfahren nach einem der Ansprüche 1 bis 2, **dadurch gekennzeichnet, dass** der erste vorbestimmte Durchflussschwellenwert (S1 oder S2) weniger als 50 % eines ersten vorbestimmten Durchflusswerts beträgt, der als erster normaler Durchflusswert bezeichnet wird, welcher mit einem als normal bezeichneten Betrieb des ersten Magnetventils verknüpft ist, und dadurch, dass der zweite vorbestimmte Durchflussschwellenwert (S1 oder S2) weniger als 50 % eines zweiten vorbestimmten Durchflusswerts beträgt, der als zweiter normaler Durchflusswert bezeichnet wird, welcher mit einem als normal bezeichneten Betrieb des zweiten Magnetventils verknüpft ist.

4. Verfahren nach einem der Ansprüche 1 bis 3, **dadurch gekennzeichnet, dass** es weiter die folgenden Schritte umfasst:
- vor dem Schritt a), Initialisieren (E1) eines Parameters n,
- vor dem Schritt b), Inkrementieren (E3) des Parameters n,
- vor dem Schritt e), Vergleichen (E7) des Werts des Parameters n mit einem vorbestimmten Maximalwert N,
- wenn der Wert des Parameters n gleich dem vorbestimmten Maximalwert N ist, Ausführen des Schritts e), und andernfalls erneutes Beginnen beim Schritt des Inkrementierens von n.

## Claims

1. Method for controlling a system (S) for measuring the fuel consumption of an engine, the engine (M) being provided with a fuel supply circuit placed between a tank and the engine and a fuel return circuit from the engine to the tank,
the system comprising an inlet flowmeter (DB1) mounted on the fuel supply circuit, a return flowmeter (DB2) mounted on the fuel return circuit, a first solenoid valve (EV1) mounted in parallel with one of said inlet and return flowmeters, called first flowmeter, said method being **characterised in that** it includes the following successive steps:
a) determining (E2) if the flow rate measured by the first flowmeter is less than a first predetermined flow rate threshold value (S1 or S2) and if the flow rate measured by the other of said inlet and return flowmeters, called second flowmeter, is greater than or equal to a second predetermined flow rate threshold value (S1 or S2);
b) opening (E4) for a predetermined first duration (D1) the first solenoid valve if the flow rate measured by the first flowmeter is less than the first predetermined flow rate threshold value and the flow rate measured by the second flowmeter is greater than or equal to the second predetermined flow rate threshold value, said first predetermined duration (D1) being less than 300 s, preferably between 30 and 120 seconds
c) closing (E5) for a second predetermined duration (D2) said first solenoid valve, said second duration (D2) being comprised between 0.5 s and 20 s, preferably between 2s and 5s;
d) determining (E6) if the flow rate measured by the first flowmeter is still less than the first predetermined flow rate threshold value and if the flow rate measured by the second flowmeter is still greater than or equal to the second predetermined flow rate threshold value; and
e) if the flow rate measured by the first flowmeter is still less than the first predetermined flow rate threshold value and the flow rate measured by the second flowmeter is still greater than or equal to the second predetermined flow rate threshold value, opening (E8) said solenoid valve.

2. Method according to claim 1, wherein the system further comprises a second solenoid valve (EV2), mounted in parallel with the other of said inlet and return flowmeters, called second flowmeter, **characterised in that**, in step b), said first and second solenoid valves are temporarily opened and, in steps c) and e), said first and second solenoid valves are closed.

3. Method according to any of claims 1 to 2, **characterised in that** said first predetermined flow rate threshold value (S1 or S2) is less than 50% of a first predetermined flow rate value, referred to as first flow rate normal value, associated with a so-called normal operation of said first solenoid valve and **in that** said second predetermined flow rate threshold value (S1 or S2) is less than 50% of a second predetermined flow rate value, referred to as second flow rate normal value, associated with a so-called normal operation of said second solenoid valve.

4. Method according to any of claims 1 to 3, **characterised in that** it further comprises the following steps:
- before step a), a parameter n is initialised (E1),
- before step b), said parameter n is incremented (E3) ;
- before step e), the value of the parameter n is compared (E7) with a predetermined maximum value N,
- if the value of the parameter n is equal to said predetermined maximum value N, step e) is carried out and otherwise, the step of incrementing n is restarted.
